# EUROPÄISCHE PATENTANMELDUNG

(11) **EP 3 722 476 A1**
(43) Veröffentlichungstag der Anmeldung: **14.10.2020**
(21) Anmeldenummer: 19168078.4
(22) Anmeldetag: 09.04.2019
(51) Int. Cl.: D04H 1/4374, B32B 5/26, D04H 1/728

(54) **NANOFASER-VLIES-VERBUNDSTOFF**

(71) Anmelder: BASF SE, 67056 Ludwigshafen am Rhein (DE)
(72) Erfinder: Prissok, Frank, 49448 Lemförde (DE); Doroodian, Amir, 49448 Lemfoerde (DE); Ahlers, Juergen, 67056 Ludwigshafen am Rhein (DE)
(74) Vertreter: Altmann Stößel Dick Patentanwälte PartG mbB

(57) **Zusammenfassung**

Die vorliegende Erfindung betrifft einen Vlies-Verbundstoff, umfassend eine erste Vliesschicht (i) umfassend Fasern aus einem ersten thermoplastischen Elastomer aufweisend Maschen mit einer Maschenweite im Bereich von 10 bis 100 µm; eine zweite Vliesschicht (ii) umfassend Fasern aus einem zweiten thermoplastischen Elastomer aufweisend Maschen mit einer Maschenweite von ≤ 2 µm aufgebracht auf der ersten Vliesschicht; wobei die Fasern der zweiten Vliesschicht zumindest teilweise in direktem Kontakt mit den Fasern der ersten Vliesschicht stehen, sowie die Maschenöffnungen der ersten Vliesschicht zumindest teilweise überdecken, und wobei die Fasern der ersten Vliesschicht und der zweiten Vliesschicht im Kontaktbereich zumindest anteilig miteinander formschlüssig verbunden sind.

Die Erfindung betrifft weiterhin ein Verfahren zur Herstellung eines solchen Vlies-Verbundstoffes, wobei das Aufbringen der zweiten Vliesschicht (ii) auf der ersten Vliesschicht (i) mittels Elektrospinnen erfolgt.

Des Weiteren betrifft die Erfindung einen Vlies-Verbundstoff, erhalten oder erhältlich nach diesem Verfahren sowie die Verwendung eines Vlies-Verbundstoffes für die Herstellung eines Funktionsartikels.

## Beschreibung

Die vorliegende Erfindung betrifft einen Vlies-Verbundstoff, umfassend eine erste Vliesschicht (i) umfassend Fasern aus einem ersten thermoplastischen Elastomer aufweisend Maschen mit einer Maschenweite im Bereich von 10 bis 100 µm; eine zweite Vliesschicht (ii) umfassend Fasern aus einem zweiten thermoplastischen Elastomer aufweisend Maschen mit einer Maschenweite von ≤ 2 µm aufgebracht auf der ersten Vliesschicht; wobei die Fasern der zweiten Vliesschicht zumindest teilweise in direktem Kontakt mit den Fasern der ersten Vliesschicht stehen, sowie die Maschenöffnungen der ersten Vliesschicht zumindest teilweise überdecken, und wobei die Fasern der ersten Vliesschicht und der zweiten Vliesschicht im Kontaktbereich zumindest anteilig miteinander formschlüssig verbunden sind. Die Erfindung betrifft weiterhin ein Verfahren zur Herstellung eines solchen Vlies-Verbundstoffes, wobei das Aufbringen der zweiten Vliesschicht (ii) auf der ersten Vliesschicht (i) mittels Elektrospinnen erfolgt. Des Weiteren betrifft die Erfindung einen Vlies-Verbundstoff, erhalten oder erhältlich nach diesem Verfahren sowie die Verwendung eines Vlies-Verbundstoffes für die Herstellung eines Funktionsartikels.

Funktionsartikel, insbesondere Funktionsbekleidung für diverse Anwendungsbereiche, sind in diversen Ausführungen bekannt, wobei oftmals beschichtete Gewebe oder Folien- bzw. Membranlaminate verwendet werden. Anforderungen an Funktionsartikel sind meist eine ausreichende Stabilität bzw. Haltbarkeit bei gleichzeitig zufriedenstellender Reißdehnung und Wasserbeständigkeit gegen von außen auftreffende Flüssigkeiten, dies allerdings bei gleichzeitig gewünschter Atmungsaktivität/Wasserdampfdurchlässigkeit. Bei Membranlaminaten, welche in der Regel aus einer Tragschicht, der Membran und einer strapazierfähigen Deckschicht bestehen, erfolgt die Herstellung in der Regel durch Vernähen von Laminatsegmenten und Verkleben der Naht mit einem wasserdichten Tape. Dabei führen allerdings die Nahtstiche wieder zu Eintrittsmöglichkeiten für Wasser, weshalb anschließend meist noch ein Versiegeln der Naht mit einem darüber liegenden Adhäsiv oder einem Dichtungsband erfolgen muss. Ein normales Verschweißen einzelner Schichten ist oftmals nicht möglich, da dabei die Mikro-/Nanostrukturen der einzelnen Schichten so zerstört werden, dass die gewünschten Eigenschaften - insbesondere die Gasdurchlässigkeit- im verschweißten Verbund nicht mehr erreicht werden oder die Schichten sich schlicht nicht verschweißen lassen, da sie bei der verwendeten Schweißtemperatur nicht thermoplastisch sind oder keinen schlüssigen Verbund durch Verschweißung eingehen.

EP 2 077 733 81 beschreibt ein mehrlagiges Kleidungsstück, welches Feuchtigkeitsdämpfe durchlässt, bei welchem eine Schicht aus Nanofasern zwischen zwei gewebten Stofflagen bzw. Stofflagen aus Maschenware eingebettet ist. Wie aus den Beispielen ersichtlich wird ein Nylon-Vlies zwischen zwei Lagen aus Polyester-Vlies (Maschenware) eingebettet, wobei für die Verbindung ein Lösungsmittelbasiertes Urethan-Adhäsiv eingesetzt wird - ein Kaltverschweißen bzw. eine schlüssige Verbindung durch Verschweißen solcher Schichten wäre aufgrund der inkompatiblen Materialien nicht möglich. US 2010/0028553 A1 offenbart ein Verfahren zur Herstellung einer Nanofaserschicht, welche auf einem Substrat aufgebracht wird. Das Substrat hierbei sind hydrophobe Polypropylen-Vliese - zum polymeren Material der aufgebrachten Nanofasern werden keine Angaben gemacht. Eine Elektrospinnvorrichtung wird ebenfalls in der WO 2012/111930 A2 beschrieben.

In der KR 2017120821 A wird thematisiert, wie ein Polymervlies mittels Elektrospinnen auf einem Trennpapier erzeugt, auf ein erstes Polyurethan-Basismaterial übertragen und dann mit diesem und einem weiteren Polyurethan-Basismaterial durch Wärmeeinwirkung verbunden wird. Ähnlich wird in der KR 2017120807 A auf einem Polyurethan-Basismaterial beidseitig jeweils ein Polymervlies aufgebracht. In beiden Schriften werden keine Angaben zur Natur des Polyurethan-Basismaterials gemacht und für die Vliesschicht werden diverse Polymere beschrieben. Vergleichbar werden in der KR 2017120818 A jeweils zwei Polymervliese mittels Elektrospinnen auf Trennpapier erzeugt und dann durch Wärmeeinwirkung mit einem Polyurethan-Basismaterial verbunden. Nachträgliches Verschweißen einzelner Schichten wie in den oben genannten koreanischen Schriften führt dazu, dass die Mikro-/Nanostrukturen der einzelnen Schichten so zerstört werden, dass die gewünschten Eigenschaften -beispielsweise die Gasdurchlässigkeit- im verschweißten Verbund nicht mehr erreicht werden.

Elektrospinnvliese sind interessant, da sie eine ausreichende Wasserdichtigkeit bieten. Nachteilig ist allerdings, dass sie allein keine ausreichende Festigkeit bieten, weshalb wie oben beschrieben immer Substrate, beispielsweise Gewebe, als Unterlagen für ein Elektrospinnvlies verwendet werden müssen. Bei Geweben sind Flächen durch Verkreuzen von zwei Fadensystemen hergestellt, bei Maschenware sind mittels Faden gebildete Schleifen in andere Schleifen hineingeschlungen.

Damit unterscheiden sich Maschenwaren und Gewebe von Vliesen, bei denen ein loser Faserflor vorliegt, welcher beispielsweise durch Wärme verfestigt wird und allein über Formschluss und/oder die Kohäsion und/oder die Adhäsion zusammengehalten wird.

Die Verwendung von Geweben, aber auch von Maschenware als Substrat führt meist dazu, dass die erhaltenen Verbundsysteme zu starr sind bzw. keine ausreichende Reißdehnung aufweisen. Weiterhin ist die Herstellung via "Stricken" deutlich teurer und die Maschenweite grober da mit einer Art Nadel gearbeitet werden muss, außerdem wird beim "Stricken" ein Gleitmittel erforderlich, damit die Fäden über die Nadeln gleiten. Folien sind als Substrate nicht geeignet, da sie per se schon keine ausreichende Wasserdampfdurchlässigkeit erlauben.

"Normale" Vliese, bei denen die Fasern einen Durchmesser im Bereich von 1 bis 50 µm und das Vlies eine Maschenweite im Bereich von 10 bis 100 µm aufweist, haben keine ausreichende Wasserdichtigkeit allein, sind als Unterlage für Verbundstoffe aber interessant, wobei die nachträgliche Verschweißung von Elektrospinnvliesen und normalen Vliesen dazu führt, dass die vorteilhaften Eigenschaften verloren gehen.

Die Aufgabe der vorliegenden Erfindung war daher die Bereitstellung eines Vlies-Verbundstoffes, welcher die oben genannten Nachteile überwindet und insbesondere eine ausreichende Wasserdichtigkeit (LEP) und Wasserdampfdurchlässigkeit (WDD) bietet.

Die Aufgabe wurde gelöst mit einem Vlies-Verbundstoff, umfassend
i) eine erste Vliesschicht umfassend Fasern aus einem ersten thermoplastischen Elastomer aufweisend Maschen mit einer Maschenweite im Bereich von 10 bis 100 µm;
ii) eine zweite Vliesschicht umfassend Fasern aus einem zweiten thermoplastischen Elastomer aufweisend Maschen mit einer Maschenweite von ≤ 2 µm, bevorzugt von ≤ 1,5 µm, weiter bevorzugt von ≤ 1,0 µm, aufgebracht auf der ersten Vliesschicht;
wobei die Fasern der zweiten Vliesschicht zumindest teilweise in direktem Kontakt mit den Fasern der ersten Vliesschicht stehen, sowie die Maschenöffnungen der ersten Vliesschicht zumindest teilweise überdecken, und wobei die Fasern der ersten Vliesschicht und der zweiten Vliesschicht im Kontaktbereich zumindest anteilig miteinander formschlüssig verbunden sind.

Überraschenderweise konnte gezeigt werden, dass ein solcher Vlies-Verbundstoff eine ausreichende Reißdehnung (vorzugsweise >200 %) aufweist, wobei gleichzeitig die Wasserdampfdurchlässigkeit (WDD) ausreichend hoch war (bei 38 °C und 90% Luftfeuchtigkeit mindestens 1000g/m²*d), aber die Wasserdichtigkeit (LEP) immer noch ausreichend hoch war (größer als 0,5 bar).

Ein "Vlies" bzw. eine "Vliesschicht" meint ein nicht-gewebtes Flächengebilde, das ganz oder zu einem wesentlichen Teil (> 90 Gewichts-%) aus Fasern besteht, wobei "Faser" Spinnfasern, Filamente (Endlosfasern) und Fasern mit einem Schlankheitsgrad (Verhältnis von Faserlänge in mm zu Faserdurchmesser in mm) von mindestens 300 umfasst. Verbundarten der Fasern untereinander im Vlies sind der Formschluss (durch Verschlingung) und/oder die Kohäsion und/oder die Adhäsion, wobei die Fasern im Vlies orientiert oder wirr angeordnet sind. "Vlies-Verbundstoff" meint einen mehrschichtigen, insbesondere textilen, Stoff, umfassend mindestens eine erste und eine zweite, auf der ersten aufgebrachte, Vliesschicht. Eine "Masche" ist eine Faser-Schlinge, die in ein oder mehrere weitere Faserschlingen eingehängt ist. Die "Maschen-weite" (w) ist der lichte Abstand zwischen zwei benachbarten Fasern bzw. Faserabschnitten in der Mitte der Masche gemessen. Die entsprechende Öffnung zwischen den benachbarten Fasern bzw. Faserabschnitten wird als "Maschenöffnung" bezeichnet. "Miteinander formschlüssig verbunden" meint, dass die Polymerketten des ersten und des zweiten thermoplastischen Elastomers bei der Verbindung bzw. im Kontaktbereich zwischen erster Vliesschicht (i) und zweiter Vliesschicht (ii) miteinander verschlungen werden bzw. sind. Die Verbindung beruht auf (Kalt-)Verschweißen bzw. aufgrund der Anwesenheit von Lösungsmittel erfolgtem Anlösen der ersten Vliesschicht (i) und anschließendem Aushärten der zweiten Vliesschicht (ii) auf der ersten Vliesschicht (i) bei Entfernung des Lösungsmittels, insbesondere wird die Verbindung bei Aufbringen der zweiten Vliesschicht (ii) auf der ersten Vliesschicht (i) mittels Elektrospinnen und dabei zeitweise vorhandenem Lösungsmittel verursacht. Dieses (Kalt-)Verschweißen erfolgt bei Temperaturen im Bereich der Raumtemperatur (15 bis 30°C) und bei Drücken im Bereich des Normaldrucks (1013 mbar) bzw. in einem Druckbereich von 0,6 bis 1,4 bar, bevorzugt im Bereich von 0,8 bis 1,2 bar.

In einer bevorzugten Ausführungsform des Vlies-Verbundstoffes ist die zweite Vliesschicht auf der ersten Vliesschicht mittels Elektrospinnen aufgebracht oder aufbringbar. Unter "Elektrospinnen" versteht man die Herstellung von sehr dünnen Fasern mit einem Faserdurchmesser im Bereich von 0,01 bis ≤0,5 µm, weiter bevorzugt im Bereich von 0,05 bis ≤0,5 µm aus Polymerlösungen, Polymerschmelzen oder Polymer-Reaktivsystemen durch die Behandlung in einem elektrischen Feld bei Spannungen im Bereich von 5-80 kV. Hierbei wird beispielsweise die Polymerlösung an einer Elektrode dosiert und durch das elektrische Feld von der Elektrode abgezogen (Überwindung der Oberflächenspannung) und beschleunigt. Beispielsweise erfolgt die Dosierung mittels Drähten, welche auf einem Zylinder angeordnet sind und durch eine Kreisbewegung regelmäßig in die Polymerlösung, die sogenannte Spinnlösung, eintauchen, wobei sie mit Lösung bedeckt werden. Da am Spinnlösungsvorratsbehältnis Hochspannung anliegt, führt dies zum Absprühen der Lösung von den Drähten. Die angelegte Spannung bewirkt eine konusförmige Verformung des Tropfens in Richtung auf die Gegenelektrode. Auf dem Weg zur Gegenelektrode verdunstet das in der Spinnlösung enthaltene Lösungsmittel zumindest teilweise, und auf der Gegenelektrode bzw. einem Träger werden mit hoher Geschwindigkeit feste, noch Lösungsmittel-feuchte Fasern als Vlies abgelagert. Beim Prozess entstehen typischerweise Fasern mit Durchmessern kleiner 500 nm (≤0,5 µm), weswegen die Produkte als Nanofasern bezeichnet werden. Als Lösungsmittel werden bevorzugt organische Lösungsmittel mit einem log_{KOW} im Bereich von -1,5 bis +1 umfasst, bevorzugt ausgewählt aus der Gruppe von Dimethylformamid (DMF, log_{KOW} -0,85), Tetrahydrofuran (THF, log_{Kow} 0,46), Dimethylsulfoxid (DMSO, log_{Kow} -1,35), N-Methyl-2-pyrrolidon (NMP, log_{KOW} -0,46), Essigsäureethylester (Ethylacetat, log_{KOW} 0,73), Methylethylketon (MEK, log_{KOW} 0,29), Ethylethylketon (EEK, log_{KOW} 0,99) und Mischungen von zwei oder mehr dieser organischen Lösungsmittel. weiter bevorzugt ausgewählt aus der Gruppe von DMF, THF und Mischungen von DMF und THF. Das Elektrospinnen erfolgt bei Temperaturen im Bereich der Raumtemperatur (15 bis 30°C) und bei Drücken im Bereich des Normaldrucks (1013 mbar) bzw. in einem Druckbereich von 0,6 bis 1,4 bar, bevorzugt im Bereich von 0,8 bis 1,2 bar.

Im Vlies-Verbundstoff umfasst die erste Vliesschicht (i) Fasern aus einem ersten thermoplastischen Elastomer und die zweite Vliesschicht (ii) umfasst Fasern aus einem zweiten thermoplastischen Elastomer. Bevorzugt sind das erste thermoplastische Elastomer der ersten Vliesschicht (i) und das zweite thermoplastische Elastomer der zweiten Vliesschicht (ii) unabhängig voneinander ausgewählt aus der Gruppe bestehend aus Polyurethan, Polyester, Polyetherester, Polyesterester, Polyamid, Polyetheramid, Polybutadienstyrol und Ethylenvinylacetat, wobei das erste thermoplastische Elastomer und das zweite thermoplastische Elastomer so ausgewählt sind, dass sie zueinander kompatibel sind, wobei bevorzugt das erste thermoplastische Elastomer und das zweite thermoplastische Elastomer beide ein, jeweils zueinander kompatibles, thermoplastisches Polyurethan (TPU) sind, wobei das TPU der ersten Vliesschicht (i) gleich oder verschieden, bevorzugt gleich, zu dem TPU der zweiten Vliesschicht (ii) ist. "Zueinander kompatibel" bedeutet, dass das erste und das zweite thermoplastische Polymer kompatibel in Bezug auf die chemische Verträglichkeit sind, wobei hier die Haftung der insbesondere mittels Elektrospinnen erzeugten zweiten Vliesschicht (ii) auf der ersten Vliesschicht (i) (synonym: Trägerschicht) essentiell ist. Das lösungsmittelhaltige Nanogespinst der zweiten Vliesschicht (ii) haftet auf der Trägerschicht durch Kaltverschweißung, d.h. es bildet sich ein formschlüssiger Verbund zwischen erster Vliesschicht (i) und zweiter Vliesschicht (ii) aus, was nur bei Polymeren möglich ist, bei denen die Weichphasen zu mindestens 50 Gewichts-%, bevorzugt zu mindestens 60 Gewichts-%, weiter bevorzugt zu mindestens 65 Gewichts-%, identische Komponenten aufweisen. Dies gilt insbesondere, wenn das thermoplastische Polymer einen Anteil der Weichphase von mindestens 50 Gewichts-% bezogen auf das Gesamtgewicht des thermoplastischen Polymers aufweist. In einer bevorzugten Ausführungsform, in welcher das erste thermoplastische Elastomer und das zweite thermoplastische Elastomer beide ein, jeweils zueinander kompatibles, thermoplastisches Polyurethan (TPU) sind (TPU1: TPU der ersten Vliesschicht (i), TPU2: TPU der zweiten Vliesschicht (ii)), gelten diese als zueinander kompatibel, wenn die Weichphasen von TPU1 und TPU2 zu mindestens 50 Gewichts-%, bevorzugt zu mindestens 60 Gewichts-%, weiter bevorzugt zu mindestens 65 Gewichts-%, identische Komponenten aufweisen. Dies gilt insbesondere, wenn sowohl TPU1 als auch TPU2 einen Anteil der Weichphase von mindestens 50 Gewichts-% bezogen auf das Gesamtgewicht des jeweiligen TPUs aufweist.

Thermoplastisches Polyurethan (TPU) ist dem Fachmann bekannt. Gemäß einer Ausführungsform des Vlies-Verbundstoffes basiert ein TPU auf den folgenden Komponenten:
- mindestens eine Verbindung (C1) aufweisend mindestens zwei gegenüber Isocyanat reaktiven Gruppen;
- mindestens ein Isocyanat (I1);
- mindestens ein Diol (D1).

Gemäß einer besonders bevorzugten Ausführungsform des Vlies-Verbundstoffes basiert ein eingesetztes TPU den folgenden Komponenten:
11 bis 79 Gewichts-%, bevorzugt 15 bis 75 Gewichts-%, weiter bevorzugt 20 bis 75 Gewichts-%, einer Mischung aus mindestens einem Diol (D1) und mindestens einem Isocyanat (I1),
- 21 bis 89 % Gewichts-%, bevorzugt 25 bis 85 Gewichts-%, weiter bevorzugt 25 bis 80 Gewichts-%, mindestens einer Verbindung (C1) aufweisend mindestens zwei gegenüber Isocyanat reaktiven Gruppen.

In einer bevorzugten Ausführungsform, in welcher das erste thermoplastische Elastomer und das zweite thermoplastische Elastomer des Vlies-Verbundstoffes beide ein, jeweils zueinander kompatibles, thermoplastisches Polyurethan (TPU) sind, d.h. das erste thermoplastische Elastomer ein TPU1 ist und das zweite thermoplastische Elastomer ein TPU2 ist, basieren sowohl TPU1 als auch TPU2 auf den genannten Komponenten, weiter bevorzugt auf den genannten Komponenten in den genannten Mengen.

Das molare Verhältnis des mindestens einen Diols (D1) zum mindestens einen Isocyanat (I1) liegt üblicherweise im Bereich von 1:3 bis 3:1. Bevorzugt liegt das molare Verhältnis des mindestens einen Diols (D1) zum mindestens einen Isocyanat (I1) im Bereich von1:1 bis 1:2, bevorzugt im Bereich von 1:1,2 bis 1:1,8, weiter bevorzugt im Bereich von 1:1,4 bis 1:1,6.

Die mindestens eine Verbindung (C1) kann jedwede Verbindung mit mindestens zwei gegenüber Isocyanat reaktiven Gruppen sein. Bevorzugt sind die gegenüber Isocyanat reaktiven Gruppen Hydroxy- oder Amino-Gruppen. Die mindestens eine Verbindung (C1) kann zur Modifikation der Eigenschaften des TPUs zugesetzt werden. Jedwede Verbindung kann verwendet werden, solange sie geeignet ist, ein thermoplastisches Polyurethan, mit der Mischung aus dem mindestens einen Diol (D1) und dem mindestens einen Isocyanat (I1) zu ergeben. Beispielsweise kann die mindestens eine Verbindung (C1) ein Polyol sein, aber auch ein Polymer mit mindestens zwei Hydroxygruppen oder mindestens zwei Aminogruppen anders als ein Polyol, beispielsweise ein hydrophobes Polymer oder Oligomer umfassend Silizium. Gemäß einer bevorzugten Ausführungsform ist die mindestens eine Verbindung (C1) aufweisend mindestens zwei gegenüber Isocyanat reaktiven Gruppen ein Polyol. Polyole sind dem Fachmann bekannt und beispielsweise beschrieben in "Kunststoffhandbuch, 7, Polyurethane", Carl Hanser Verlag, 3. Auflage 1993, Sektion 3.1. Polyole welche bevorzugt eingesetzt werden sind polymere Verbindungen die Wasserstoffatome aufweisen, welche reaktiv gegenüber Isocyanaten sind. Hier sind alle geeigneten Polyole einsetzbar, beispielsweise Polyetherpolyole oder Polyesterpolyole oder Mischungen von zwei oder mehr davon, bevorzugt Polyetherdiole oder Polyesterdiole, oder Mischungen von zwei oder mehr davon. Geeignete Polyetherdiole sind beispielsweise Polyetherdiole basierend auf Tetrahydrofuran (THF), Ethylenoxid (EO) oder Propylenoxid (PO) oder deren Mischungen, beispielsweise Copolymere wie Blockcopolymere. Weiterhin kann jedes geeignete Polyesterdiol eingesetzt werden, wobei Polyesterdiol hier auch Polycarbonatdiole umfasst. In einer Ausführungsform wird als mindestens eine Verbindung (C1) mindestens ein Polyetherdiol eingesetzt, bevorzugt ausgewählt der Gruppe von Polytetrahydrofuran (PTHF), Polyethylenglykol (PEG) und Mischungen von PTHF und PEG, wobei jede dieser Komponenten wiederum ein einzelnes Polyetherdiol oder eine Mischung von zwei oder mehr der jeweiligen Polyetherdiole ist. PTHF weist bevorzugt ein zahlenmittleres Molekulargewicht Mn im Bereich von 500 bis 3000 g/mol, bevorzugt im Bereich von 1000 bis 2000 g/mol, auf, PEG ebenfalls bevorzugt ein zahlenmittleres Molekulargewicht Mn im Bereich von 500 bis 3000 g/mol, bevorzugt im Bereich von 1000 bis 2000 g/mol, aufweist.

Das mindestens eine Isocyanat (I1) ist bevorzugt mindestens ein Polyisocyanat (I1). Als Polyisocyanat (I1) können aliphatische, cycloaliphatische, araliphatische und/oder aromatische Polyisocyanate, bevorzugt Diisocyanate, eingesetzt werden. Beispielhaft zu nennen sind die folgenden aromatischen Diisocyanate: 2,4-Toluol-diisocyanat, Mischungen aus 2,4- und 2,6-Toluoldiisocyanat, 4,4'-, 2,4'- und/oder 2,2'-Diphenylmethandiisocyanat (MDI), Mischungen aus 2,4'- und 4,4'-Diphenylmethandiisocyanat, urethan-modifiziertes flüssiges 4,4'- und/oder 2,4-Diphenylmethandiisocyanat, 4,4'-Diisocyanatodiphenylethan, Mischungen aus monomeren Methandiphenyldiisocyanaten und weiteren hoch polycyclischen Homologen von Methandiphenyldiisocyanat (polymeres MDI), 1,2- und 1,5-Naphthylendiisocyanat. Aliphatische Diisocyanate sind übliche aliphatische und/oder cycloaliphatische Diisocyanate, beispielsweise tri-, tetra-, penta-, hexa-, hepta- und/oder Octamethylendiisocyanat, 2-Methylpentamethylen-1,5-diisocyanat, 2-Ethylbutylen-1,4-diisocyanat, 1-Isocyanato-3,3,5-trimethyl-5-isocyanatomethylcyclohexan (Isophorondiisocyanat, IPDI), 1,4- und/oder 1,3-Bis(isocyanatomethyl)cyclohexan (HXDI), 1,4-Cyclohexandiisocyanat, 1-Methyl-2,4- und/oder -2,6-cyclohexandiisocyanat, 4,4'-, 2,4'- und/oder 2,2'-Dicyclohexylmethandiisocyanat (H12MDI). Gemäß einer Ausführungsform ist das mindestens eine Isocyanat (I1) ein Diisocyanat ausgewählt aus der Gruppe bestehend aus Diphenylmethandiisocyanat (MDI), Toluoldiisocyanat (TDI), und Hexamethylendiisocyanat (HDI), Dicyclohexylmethan-4,4'-diisocyanat (H12MDI), und umfasst bevorzugt mindestens MDI.

Das Polyisocyanat kann rein oder in Form einer Zusammensetzung, beispielsweise als Isocyanatprepolymer eingesetzt werden. Weiterhin kann eine Mischung umfassend Polyisocyanat und mindestens ein Lösungsmittel, eingesetzt werden, wobei geeignete Lösungsmittel dem Fachmann bekannt sind. Polyisocyanatprepolymere sind erhältlich mittels Reaktion der oben beschriebenen Polyisocyanate im Überschuss, beispielsweise bei Temperaturen im Bereich von 30 bis 100°C, bevorzugt bei mehr als 80°C, mit Polyolen unter Erhalt des Prepolymers. Für die Herstellung des Prepolymers werden bevorzugt Polyisocyanate und kommerziell erhältliche Polyole basierend auf Polyestern eingesetzt, ausgehend beispielsweise von Adipinsäure, oder auf Polyethern, ausgehend beispielsweise von Tetrahydrofuran, Ethylenoxid und/oder Propylenoxid. Polyole sind dem Fachmann bekannt und beispielsweise beschrieben in "Kunststoffhandbuch, 7, Polyurethane", Carl Hanser Verlag, 3. Auflage 1993, Sektion 3.1. Polyole welche bevorzugt eingesetzt werden sind polymere Verbindungen die Wasserstoffatome aufweisen, welche reaktiv gegenüber Isocyanaten sind. Besonders bevorzugte Polyole sind Polyetherpolyole. In der Herstellung der Polyisocyanatprepolymere können übliche Kettenverlängerer oder Vernetzungsmittel optional den Polyolen zugesetzt werden. Bevorzugte Kettenverlängerer sind Ethandiol, Butandiol, Hexandiol und Monoethylenglykol, weiter bevorzugt mindestens 1,4-Butandiol oder Monoethylenglykol. In diesem Fall ist das Verhältnis der organischen Polyisocyanate zu Polyolen und Kettenverlängerer vorzugsweise so gewählt, dass das Isocyanatprepolymer einen NCO-Gehalt im Bereich von 2 bis 30 Gewichts-%, weiter bevorzugt im Bereich von 6 bis 28 Gewichts-%, weiter bevorzugt im Bereich von 10 bis 24 Gewichts-%, aufweist.

Als Diol (D1), welches als Kettenverlängerer (K) fungiert, kann generell jedwedes Diol eingesetzt werden. Das Diol (D1) ist bevorzugt ausgewählt aus der Gruppe bestehend aus aliphatischen, araliphatischen, aromatischen, und/oder cycloaliphatischen Verbindungen mit einem Molgewicht im Bereich von 0,05 kg/mol bis 0,499 kg/mol, bevorzugt difunktionale Verbindungen, beispielsweise Diamine und/oder Alkandiole mit 2 bis 10 Kohlenstoffatomen im Alkylenteil, di-, tri-, tetra-, penta-, hexa-, hepta-, octa-, nona-, und/oder Decaalkylenglykole aufweisend von 3 bis 8 Kohlenstoffatome, insbesondere Ethylen-1,2-glykol, 1,3-Propandiol, 1,4-Butandiol, 1,6-Hexandiol, und bevorzugt korrespondierende oligo- und/oder Polypropylenglykole wie Diethylenglykol, Dipropylenglykol, 1,4-Cyclohexandiol, 1,4-Dimethanolcyclohexan, und Neopentylglykol, und es ist also möglich Mischungen zu verwenden. Bevorzugt weisen die Diole nur primäre Hydroxygruppen auf. In einer Ausführungsform werden als Diol (D1) bevorzugt 1,4-Butandiol, 1,3-Propandiol oder Mischungen aus 1,4-Butandiol, 1,3-Propandiol eingesetzt.

In der Herstellung des TPUs können weitere Verbindungen wie beispielsweise Katalysatoren, und/oder übliche Hilfsstoffe und/oder Additive eingesetzt werden. Übliche Hilfsstoffe sind beispielsweise oberflächenaktive Substanzen, Füllstoffe, Flammhemmer, Nukleirungsmittel, Oxidationsstabilisatoren, Schmiermittel und Mold-release-Hilfen, Farbstoffe, Pigmente und optional Stabilisatoren, beispielsweise zum Schutz gegen Hydrolyse, Licht, Hitze oder Entfärbung, anorganische und/oder organische Füllstoffe, Verstärkungsmittel und Weichmacher. Übliche Hilfsstoffe und Additive können beispielhaft dem "Kunststoffhandbuch" entnommen werden ("Kunststoffhandbuch"; 7, "Polyurethane", Carl Hanser Verlag, 1. Auflage 1966, Seiten 103-113). Gemäß einer Ausführungsform des Vlies-Verbundstoffes weisen die Fasern der ersten Vliesschicht (i) und der zweiten Vliesschicht (ii) jeweils unabhängig voneinander einen Durchmesser im Bereich von 0,01 bis 100 µm auf, wobei bevorzugt die Fasern der ersten Vliesschicht (i) einen Durchmesser im Bereich von 1 bis 50 µm, bevorzugt im Bereich von 10 bis 30 µm; und die Fasern der zweiten Vliesschicht (ii) einen Durchmesser im Bereich von 0,01 bis ≤0,5 µm, bevorzugt im Bereich von 0,05 bis ≤0,5 µm, weiter bevorzugt im Bereich von 0,08 bis 0,2 µm, aufweisen. Ein Vlies-Verbundstoff, in welchem die Fasern der ersten Vliesschicht (i) einen Durchmesser im Bereich von 0,01 bis 100 µm, bevorzugt im Bereich von 1 bis 50 µm, weiter bevorzugt im Bereich von 10 bis 30 µm; und die Fasern der zweiten Vliesschicht (ii) einen Durchmesser im Bereich von 0,01 bis ≤0,5 µm, weiter bevorzugt im Bereich von 0,05 bis ≤0,5 µm, weiter bevorzugt im Bereich von 0,08 bis 0,2 µm, aufweisen, wird auch als Nanofaser-Vlies-Verbundstoff bezeichnet, da die Fasern der zweiten Vliesschicht (ii) Nanofasern sind.

Gemäß einer Ausführungsform des Vlies-Verbundstoffes weist die erste Vliesschicht (i) eine Maschenweite im Bereich von 20 bis 95 µm, bevorzugt im Bereich von 30 bis 90 µm, weiter bevorzugt im Bereich von 40 bis 80 µm, auf. Gemäß einer Ausführungsform des Vlies-Verbundstoffes weist die zweite Vliesschicht (ii) eine Maschenweite im Bereich von 50 bis 2000 nm, bevorzugt im Bereich von 200 bis 1500 nm, weiter bevorzugt im Bereich von 300 bis 1000 nm, auf. Gemäß einer Ausführungsform des Vlies-Verbundstoffes weist der Vliesverbundstoff insgesamt eine Maschenweite von weniger als 2000 nm, bevorzugt im Bereich von 50 bis 2000 nm, weiter bevorzugt im Bereich von 200 bis 1500 nm, weiter bevorzugt im Bereich von 300 bis 1000 nm, auf.

Gemäß einer Ausführungsform des Vlies-Verbundstoffes weist dieser eine Wasserdichtigkeit (LEP) von mehr als 0,5 bar auf. Die Reißdehnung des Vlies-Verbundstoffes liegt bevorzugt bei mehr als 200 %, weiter bevorzugt bei mehr als 250 %. Gemäß einer Ausführungsform des Vlies-Verbundstoffes weist dieser eine Wasserdampfdurchlässigkeit (WDD) bei 38 °C und 90 % Luftfeuchtigkeit von mindestens 1000g/m²*d auf.

### Verfahren zur Herstellung eines Vlies-Verbundstoffes

Die Erfindung betrifft weiterhin ein Verfahren zur Herstellung eines Vlies-Verbundstoffes umfassend:
a) Bereitstellen einer ersten Vliesschicht (i) umfassend Fasern aus einem ersten thermoplastischen Elastomer und aufweisend Maschen mit einer Maschenweite im Bereich von 10 bis 100 µm;
b) Bereitstellen einer Polymerlösung, -oder einer Polymerschmelze oder eines Polymerreaktivsystems, umfassend ein zweites thermoplastisches Elastomer oder dessen Komponenten, welches zu dem ersten thermoplastischen Elastomer der ersten Vliesschicht (i) kompatibel ist;
c) Aufbringen einer zweiten Vliesschicht (ii) auf der ersten Vliesschicht (i) mittels Elektrospinnen, wobei die zweite Vliesschicht (ii) Fasern aus einem zweiten thermoplastischen Elastomer aufweisend Maschen mit einer Maschenweite von ≤ 2 µm, bevorzugt von ≤ 1 µm, umfasst; unter Erhalt eines Vlies-Verbundstoffes.

Das Elektrospinnen ist oben im Detail für den Vlies-Verbundstoff beschrieben, wobei die dort genannten Details gleichfalls für das hier beschriebene Herstellungsverfahren gelten; es erfolgt bei Temperaturen im Bereich der Raumtemperatur (15 bis 30°C) und bei Normaldruck bzw. in einem Druckbereich von 0.8 bis 1.2 bar.

Ein Polymerreaktivsystem meint ein Mehr-, insbesondere Zweikomponentensystem, dessen Komponenten während des Elektrospinnens zum zweiten thermoplastischen Elastomer ausreagieren.

Gemäß einer Ausführungsform des Verfahrens zur Herstellung eines Vlies-Verbundstoffes sind das erste thermoplastische Elastomer der gemäß (a) bereitgestellten erste Vliesschlicht (i) und das zweite thermoplastische Elastomer der gemäß (b) bereitgestellten Polymerlösung unabhängig voneinander ausgewählt aus der Gruppe bestehend aus Polyurethan, Polyester, Polyetherester, Polyesterester, Polyamid, Polyetheramid, Polybutadienstyrol und Ethylenvinylacetat, wobei das erste thermoplastische Elastomer und das zweite thermoplastische Elastomer so ausgewählt sind, dass sie zueinander kompatibel sind, wobei bevorzugt das erste thermoplastische Elastomer und das zweite thermoplastische Elastomer beide ein, jeweils zueinander kompatibles, thermoplastisches Polyurethan (TPU) sind, wobei das erste TPU (TPU1) gleich oder verschieden, bevorzugt gleich, zu dem zweiten TPU (TPU2) ist. Hinsichtlich des TPUs bzw. hinsichtlich TPU1, TPU2 gilt das gleiche, wie oben bereits zum Vlies-Verbundstoff ausgeführt.

Gemäß (b) des Verfahrens zur Herstellung eines Vlies-Verbundstoffes wird eine Polymerlösung bereitgestellt. Diese bereitgestellte Polymerlösung umfasst bevorzugt ein organisches Lösungsmittel mit einem log_{KOW} im Bereich von -1,5 bis +1, weiter bevorzugt ausgewählt aus der Gruppe von Dimethylformamid (DMF, log_{KOW} -0,85), Tetrahydrofuran (THF, log_{Kow} 0,46), Dimethylsulfoxid (DMSO, log_{Kow} -1,35), N-Methyl-2-pyrrolidon (NMP, log_{KOW} -0,46), Essigsäureethylester (Ethylacetat, log_{KOW} 0,73), Methylethylketon (MEK, log_{KOW} 0,29), Ethylethylketon (EEK, log_{KOW} 0,99) und Mischungen von zwei oder mehr dieser organischen Lösungsmittel, weiter bevorzugt ausgewählt aus der Gruppe von DMF, THF und Mischungen von DMF und THF.

In einer Ausführungsform des Verfahrens zur Herstellung eines Vlies-Verbundstoffes weist die gemäß (b) bereitgestellte Polymerlösung eine Polymerkonzentration im Bereich von 3-50 Gewichts-%, bevorzugt im Bereich von 5-30 Gewichts-%, weiter bevorzugt im Bereich von 10-20 Gewichts-%, auf, insbesondere wenn das zweite thermoplastische Elastomer ein TPU ist, jeweils bezogen auf das Gesamtgewicht der Polymerlösung von 100 Gewichts-%.

In einer Ausführungsform des Verfahrens zur Herstellung eines Vlies-Verbundstoffes weisen die Fasern der gemäß (a) bereitgestellten ersten Vliesschicht (i) einen Durchmesser im Bereich von 0,01 bis 100 µm, bevorzugt im Bereich von 1 bis 50 µm, weiter bevorzugt im Bereich von 10 bis 30 µm, auf.

In einer Ausführungsform des Verfahrens zur Herstellung eines Vlies-Verbundstoffes weisen die Fasern der gemäß (c) aufgebrachten zweiten Vliesschicht (ii) einen Durchmesser im Bereich von 0,01 bis 2 µm, bevorzugt im Bereich von 0,01 bis ≤0,5 µm, weiter bevorzugt im Bereich von 0,05 bis ≤0,5 µm, weiter bevorzugt im Bereich von 0,08 bis 0,2 µm, auf.

In einer Ausführungsform des Verfahrens zur Herstellung eines Vlies-Verbundstoffes weist die gemäß (c) aufgebrachte zweite Vliesschicht (ii) eine Maschenweite im Bereich von 50 bis 2000 nm, bevorzugt im Bereich von 200 bis 1500 nm, weiter bevorzugt im Bereich von 300 bis 1000 nm, auf.

In einer Ausführungsform des Verfahrens zur Herstellung eines Vlies-Verbundstoffes weist die gemäß (a) bereitgestellte erste Vliesschicht (i) eine Maschenweite im Bereich von 20 bis 95 µm, bevorzugt im Bereich von 30 bis 90 µm, weiter bevorzugt im Bereich von 40 bis 80 µm, auf.

In einer Ausführungsform des Verfahrens zur Herstellung eines Vlies-Verbundstoffes weist der gemäß (c) erhaltene Vlies-Verbundstoff insgesamt eine Maschenweite von weniger als 2000 nm, bevorzugt im Bereich von 50 bis 2000 nm, weiter bevorzugt im Bereich von 200 bis 1500 nm, weiter bevorzugt im Bereich von 300 bis 1000 nm, auf. Da die Fasern der zweiten Vliesschicht (ii) die Maschenöffnungen der ersten Vliesschicht (i) überdecken, entspricht die Maschenweite des gesamten Vlies-Verbundstoffes der Maschenweite der zweiten Vliesschicht.

Die Erfindung betrifft ebenfalls einen Vlies-Verbundstoff, erhalten oder erhältlich nach dem oben beschriebenen Verfahren.

Des Weiteren betrifft die Erfindung die Verwendung eines Vlies-Verbundstoffes wie oben beschrieben oder eines Vlies-Verbundstoffes erhalten oder erhältlich nach dem oben beschriebenen Verfahren für die Herstellung eines Funktionsartikels, wobei der Funktionsartikel bevorzugt ausgewählt ist aus der Gruppe bestehend aus Funktionsbekleidungsstück, insbesondere Jacke, Hose, Pulli, Weste, Kapuzenshirt, Overall, Cape, Poncho, Mantel, Mütze oder Hut, bevorzugt für Sportbekleidung wie Golf- Ski, Wander-, Lauf-, Joggingbekleidung, Funktionsschuh, Funktionsgegenstand, insbesondere Tasche, Rucksack oder Zelt; Badebekleidungsstück, insbesondere Badeanzug, Tankini, Bikini, Badehose, Badeschuh oder Badekappe; Bekleidung für Wassersport, insbesondere Segelbekleidung, Surfbekleidung oder Kitesurfbekleidung, bevorzugt Surfbekleidung oder Kitesurfbekleidung, bevorzugt Funktionsbekleidungsstück.

Die vorliegende Erfindung wird weiter illustriert durch die folgenden Ausführungsformen und Kombinationen von Ausführungsformen wie angezeigt durch die entsprechenden Bezüge und Rückbezüge. Insbesondere ist zu betonen, dass jede Instanz, wo ein Bereich von Ausführungsformen angegeben ist, beispielsweise im Kontext eines Ausdrucks wie "Das Verfahren nach einer der Ausführungsformen 1 bis 4", jede Ausführungsform im Bereich als explizit für den Fachmann offenbart gemeint ist, d.h. die Bedeutung dieses Ausdrucks ist vom Fachmann als synonym zu "Das Verfahren nach einer der Ausführungsformen 1, 2, 3 und 4" zu verstehen. Es ist anzumerken, dass die folgenden Ausführungsformen nicht die Ansprüche darstellen, die den Umfang des Schutzes determinieren, sondern vielmehr einen geeignet strukturierten Teil der Beschreibung darstellen, der auf allgemeine und bevorzugte Aspekte der vorliegenden Erfindung gerichtet ist.
1. Vlies-Verbundstoff, umfassend
   i) eine erste Vliesschicht umfassend Fasern aus einem ersten thermoplastischen Elastomer aufweisend Maschen mit einer Maschenweite im Bereich von 10 bis 100 µm;
   ii) eine zweite Vliesschicht umfassend Fasern aus einem zweiten thermoplastischen Elastomer aufweisend Maschen mit einer Maschenweite von ≤ 2 µm, bevorzugt von ≤ 1,5 µm, weiter bevorzugt von ≤ 1,0 µm, aufgebracht auf der ersten Vliesschicht;
   wobei die Fasern der zweiten Vliesschicht zumindest teilweise in direktem Kontakt mit den Fasern der ersten Vliesschicht stehen, sowie die Maschenöffnungen der ersten Vliesschicht zumindest teilweise überdecken, und wobei die Fasern der ersten Vliesschicht und der zweiten Vliesschicht im Kontaktbereich zumindest anteilig miteinander formschlüssig verbunden sind.
2. Vlies-Verbundstoff nach Ausführungsform 1, wobei die zweite Vliesschicht auf der ersten Vliesschicht mittels Elektrospinnen aufgebracht oder aufbringbar ist.
3. Vlies-Verbundstoff nach Ausführungsform 1 oder 2, wobei das erste thermoplastische Elastomer der ersten Vliesschicht (i) und das zweite thermoplastische Elastomer der zweiten Vliesschicht (ii) unabhängig voneinander ausgewählt sind aus der Gruppe bestehend aus Polyurethan, Polyester, Polyetherester, Polyesterester, Polyamid, Polyetheramid, Polybutadienstyrol und Ethylenvinylacetat, wobei das erste thermoplastische Elastomer und das zweite thermoplastische Elastomer so ausgewählt sind, dass sie zueinander kompatibel sind, wobei bevorzugt das erste thermoplastische Elastomer und das zweite thermoplastische Elastomer beide ein, jeweils zueinander kompatibles, thermoplastisches Polyurethan (TPU) sind, wobei das TPU der ersten Vliesschicht (i) gleich oder verschieden, bevorzugt gleich, zu dem TPU der zweiten Vliesschicht (ii) ist.
4. Vlies-Verbundstoff nach einer der Ausführungsformen 1 bis 3, wobei die Fasern der ersten Vliesschicht (i) und der zweiten Vliesschicht (ii) jeweils unabhängig voneinander einen Durchmesser im Bereich von 0,01 bis 100 µm aufweisen, wobei bevorzugt die Fasern der ersten Vliesschicht (i) einen Durchmesser im Bereich von 1 bis 50 µm, bevorzugt im Bereich von 10 bis 30 µm; und die Fasern der zweiten Vliesschicht (ii) einen Durchmesser im Bereich von 0,01 bis ≤0,5 µm, bevorzugt im Bereich von 0,05 bis ≤0,5 µm, weiter bevorzugt im Bereich von 0,08 bis 0,2 µm, aufweisen.
5. Vlies-Verbundstoff nach einer der Ausführungsformen 1 bis 4, wobei die zweite Vliesschicht (ii) eine Maschenweite im Bereich von 50 bis 2000 nm, bevorzugt im Bereich von 200 bis 1500 nm, weiter bevorzugt im Bereich von 300 bis 1000 nm, aufweist.
6. Vlies-Verbundstoff nach einer der Ausführungsformen 1 bis 5, wobei die erste Vliesschicht (i) eine Maschenweite im Bereich von 20 bis 95 µm, bevorzugt im Bereich von 30 bis 90 µm, weiter bevorzugt im Bereich von 40 bis 80 µm, aufweist.
7. Vlies-Verbundstoff nach einer der Ausführungsformen 1 bis 6, wobei der Vliesverbundstoff insgesamt eine Maschenweite von weniger als 2000 nm, bevorzugt im Bereich von 50 bis 2000 nm, weiter bevorzugt im Bereich von 200 bis 1500 nm, weiter bevorzugt im Bereich von 300 bis 1000 nm, aufweist.
8. Vlies-Verbundstoff nach einer der Ausführungsformen 1 bis 7, wobei der Vlies-Verbundstoff eine Wasserdichtigkeit (LEP) von mehr als 0,5 bar aufweist.
9. Vlies-Verbundstoff nach einer der Ausführungsformen 1 bis 8, wobei der Vlies-Verbundstoff eine Reißdehnung von mehr als 200 %, bevorzugt von mehr als 250 %, aufweist.
10. Vlies-Verbundstoff nach einer der Ausführungsformen 1 bis 9, wobei der Vlies-Verbundstoff eine Wasserdampfdurchlässigkeit (WDD) bei 38 °C und 90 % Luftfeuchtigkeit von mindestens 1000g/m²*d aufweist.
11. Verfahren zur Herstellung eines Vlies-Verbundstoffes umfassend:
   a) Bereitstellen einer ersten Vliesschicht (i) umfassend Fasern aus einem ersten thermoplastischen Elastomer und aufweisend Maschen mit einer Maschenweite im Bereich von 10 bis 100 µm;
   b) Bereitstellen einer Polymerlösung, -oder einer Polymerschmelze oder eines Polymerreaktivsystems, umfassend ein zweites thermoplastisches Elastomer oder dessen Komponenten, welches zu dem ersten thermoplastischen Elastomer der ersten Vliesschicht (i) kompatibel ist;
   c) Aufbringen einer zweiten Vliesschicht (ii) auf der ersten Vliesschicht (i) mittels Elektrospinnen, wobei die zweite Vliesschicht (ii) Fasern aus einem zweiten thermoplastischen Elastomer aufweisend Maschen mit einer Maschenweite von ≤ 2 µm, bevorzugt von ≤ 1 µm, umfasst; unter Erhalt eines Vlies-Verbundstoffes.
12. Verfahren zur Herstellung eines Vlies-Verbundstoffes nach Ausführungsform 11, wobei das erste thermoplastische Elastomer der gemäß (a) bereitgestellten erste Vliesschlicht (i) und das zweite thermoplastische Elastomer der gemäß (b) bereitgestellten Polymerlösung unabhängig voneinander ausgewählt sind aus der Gruppe bestehend aus Polyurethan, Polyester, Polyetherester, Polyesterester, Polyamid, Polyetheramid, Polybutadienstyrol und Ethylenvinylacetat, wobei das erste thermoplastische Elastomer und das zweite thermoplastische Elastomer so ausgewählt sind, dass sie zueinander kompatibel sind, wobei bevorzugt das erste thermoplastische Elastomer und das zweite thermoplastische Elastomer beide ein, jeweils zueinander kompatibles, thermoplastisches Polyurethan (TPU) sind, wobei das erste TPU gleich oder verschieden, bevorzugt gleich, zu dem zweiten TPU ist.
13. Verfahren zur Herstellung eines Vlies-Verbundstoffes nach Ausführungsform 11 oder 12, wobei die gemäß (b) bereitgestellte Polymerlösung ein organisches Lösungsmittel mit einem log_{KOW} im Bereich von -1,5 bis +1 umfasst, bevorzugt ausgewählt aus der Gruppe von Dimethylformamid (DMF, log_{KOW} -0,85), Tetrahydrofuran (THF, log_{Kow} 0,46), Dimethylsulfoxid (DMSO, log_{Kow} -1,35), N-Methyl-2-pyrrolidon (NMP, log_{KOW} -0,46), Essigsäureethylester (Ethylacetat, log_{KOW} 0,73), Methylethylketon (MEK, log_{KOW} 0,29), Ethylethylketon (EEK, log_{KOW} 0,99) und Mischungen von zwei oder mehr dieser organischen Lösungsmittel. weiter bevorzugt ausgewählt aus der Gruppe von DMF, THF und Mischungen von DMF und THF.
14. Verfahren zur Herstellung eines Vlies-Verbundstoffes nach einer der Ausführungsformen 11 bis 13, wobei die gemäß (b) bereitgestellte Polymerlösung eine Polymerkonzentration im Bereich von 3-50 Gewichts-%, bevorzugt im Bereich von 5-30 Gewichts-%, weiter bevorzugt im Bereich von 10-20 Gewichts-% aufweist, insbesondere wenn das zweite thermoplastische Elastomer ein TPU ist, jeweils bezogen auf das Gesamtgewicht der Polymerlösung von 100 Gewichts-%.
15. Verfahren zur Herstellung eines Vlies-Verbundstoffes nach einer der Ausführungsformen 11 bis 13, wobei die Fasern der gemäß (a) bereitgestellten ersten Vliesschicht (i) einen Durchmesser im Bereich von 0,01 bis 100 µm, bevorzugt im Bereich von 1 bis 50 µm, weiter bevorzugt im Bereich von 10 bis 30 µm, aufweisen.
16. Verfahren zur Herstellung eines Vlies-Verbundstoffes nach einer der Ausführungsformen 11 bis 15, wobei die Fasern der gemäß (c) aufgebrachten zweiten Vliesschicht (ii) einen Durchmesser im Bereich von 0,01 bis 2 µm, bevorzugt im Bereich von 0,01 bis ≤0,5 µm, weiter bevorzugt im Bereich von 0,05 bis ≤0,5 µm, weiter bevorzugt im Bereich von 0,08 bis 0,2 µm, aufweisen.
17. Verfahren zur Herstellung eines Vlies-Verbundstoffes nach einer der Ausführungsformen 11 bis 16, wobei die gemäß (c) aufgebrachte zweite Vliesschicht (ii) eine Maschenweite im Bereich von 50 bis 2000 nm, bevorzugt im Bereich von 200 bis 1500 nm, weiter bevorzugt im Bereich von 300 bis 1000 nm, aufweist.
18. Verfahren zur Herstellung eines Vlies-Verbundstoffes nach einer der Ausführungsformen 11 bis 17, wobei die gemäß (a) bereitgestellte erste Vliesschicht (i) eine Maschenweite im Bereich von 20 bis 95 µm, bevorzugt im Bereich von 30 bis 90 µm, weiter bevorzugt im Bereich von 40 bis 80 µm, aufweist.
19. Verfahren nach einer der Ausführungsformen 11 bis 18, wobei der gemäß (c) erhaltene Vlies-Verbundstoff insgesamt eine Maschenweite von weniger als 2000 nm, bevorzugt im Bereich von 50 bis 2000 nm, weiter bevorzugt im Bereich von 200 bis 1500 nm, weiter bevorzugt im Bereich von 300 bis 1000 nm, aufweist.
20. Vlies-Verbundstoff, erhalten oder erhältlich nach dem Verfahren gemäß einer der Ausführungsformen 11 bis 19.
21. Verwendung eines Vlies-Verbundstoffes gemäß einer der Ausführungsformen 1 bis 10 oder eines Vliesverbundstoffes erhalten oder erhältlich nach dem Verfahren gemäß einer der Ausführungsformen 11 bis 19 für die Herstellung eines Funktionsartikels, wobei der Funktionsartikel bevorzugt ausgewählt ist aus der Gruppe bestehend aus Funktionsbekleidungsstück, insbesondere Jacke, Hose, Pulli, Weste, Kapuzenshirt, Overall, Cape, Poncho, Mantel, Mütze oder Hut, bevorzugt für Sportbekleidung wie Golf- Ski, Wander-, Lauf-, Joggingbekleidung, Funktionsschuh, Funktionsgegenstand, insbesondere Tasche, Rucksack oder Zelt; Badebekleidungsstück, insbesondere Badeanzug, Tankini, Bikini, Badehose, Badeschuh oder Badekappe; Bekleidung für Wassersport, insbesondere Segelbekleidung, Surfbekleidung oder Kitesurfbekleidung, bevorzugt Surfbekleidung oder Kitesurfbekleidung, bevorzugt Funktionsbekleidungsstück.

Die Erfindung wird nachfolgend anhand von Beispielen näher erläutert, ohne sie darauf zu beschränken.

### Beispiele

### 1. Chemikalien

**Tabelle 1**

| Eingesetzte Chemikalien | | |
|---|---|---|
| Abkürzung | Bezeichnung | Chemische Zusammensetzung |
| Iso1 | Isocyanat 1 | 4,4'-Diisocyanatodiphenylmethan |
| Poly1 | Polyol 1 | Polytetrahydrofuran, Mn¹⁾: ∼2000 g/mol, mit einer OH Zahl von 56 |
| Poly2 | Polyol 2 | Polytetrahydrofuran, Mn¹⁾: ∼1000 g/mol, mit einer OH Zahl von 112 |
| Poly3 | Polyol 3 | Polyethylenglykol Mn¹⁾: ∼ 1500g/mol mit einer OH Zahl von 75 |
| KV1 | Kettenverlängerer 1 | 1,4-Butandiol |
| KV2 | Kettenverlängerer 2 | 1,3-Propandiol |
| Weich1 | Weichmacher 1 | Acetyltributylcitrat |
| Stab1 | Stabilisator 1 (Antioxidationsmittel) | sterisch gehindertes Phenol |
| UV1 | UV Stabilisator | Benztriazolderivate |
| Wachs1 | Gleitmittel 1 | Bisstearylamid |
| Wachs2 | Gleitmittel 2 | Esterwachs |

| | | |
|---|---|---|
| ¹) Mn ist das zahlen mittlere Molekulargewicht | | |

### 2. Meßmethoden

Härte: DIN 53505
Zugfestigkeit, Reißdehnung und Spannung: DIN 53504
Spannungswert: DIN 53504-S2
Weiterreißwiderstand: DIN ISO 34-1, B (b)
Dichte: DIN 53479

Wasserdampfdurchlässigkeit (WDD): DIN 53122 bei 38 °C und 90 % Luftfeuchtigkeit und bei 23 °C und 85 % Luftfeuchtigkeit

Die Wasserdampfpermeabilitäten (water vapour permeability, WDD) wurde mit einem Cup-Verfahren bei 38 °C und 90 % relativer Feuchtigkeit, sowie bei 23 °C und 85 % relativer Feuchtigkeit gemäß DIN 53122 bestimmt. Für eine bestimmte Membrandicke wurden absolute WDD-Werte bestimmt. Hohe WDD-Werte waren erwünscht und erlaubten hohe Flussraten des Wasserdampfes.

### Wasserdichtigkeit (LEP): DIN 20811

Der Flüssigkeitseintrittsdruck (LEP) der Membranen wurde gemäß DIN EN 20811 unter Verwendung einer Druckzelle mit einem Durchmesser von 60 mm mit ultrareinem Wasser (salzfreies Wasser, gefiltert durch ein Millipore UF-System) bis zu 4,0 bar (40 000 mm Wassersäule) bestimmt. Der Flüssigkeitseintrittsdruck LEP ist definiert als der Druck, bei welchem das flüssige Wasser beginnt, die Membran zu permeieren. Ein hoher LEP erlaubt es der Membran, einer hohen Wassersäule (flüssig) standzuhalten.

### 3. Allgemeine Verfahrensvorschrift zur Herstellung der thermoplastischen Polyurethane (TPUs)

Die Polyole wurden unter Rühren mit dem Kettenverlängerer versetzt. Nach anschließender Erwärmung der Lösung auf 80 °C wurden das Isocyanat sowie ggf. die in den Rezepturen aufgeführten Additive zugegeben und so lange gerührt, bis die Lösung homogen war. Die Reaktionsmischung erhitzte sich und wurde dann auf einen beheizten, teflonbeschichteten Tisch ausgegossen. Die Gießschwarte wurde 15h bei 80°C getempert. Das so hergestellte Material wurde in einer Mühle zu einem schüttfähigen Granulat zerkleinert, erneut getrocknet und in Aluminium beschichtete PE-Beutel zur weiteren Verwendung gefüllt.

### Extrusion:

Zur Homogenisierung der hergestellten Proben wurden diese auf einem Zweiwellenextruder zu Zylindergranulat verarbeitet.

Die Extrusion erfolgte auf einem Doppelschneckenextruder mit 19mm Schneckendurchmesser, der einen Strangdurchmesser von ca. 2 mm lieferte.

**Tabelle 2**

| Extrusionsdaten | |
|---|---|
| Extruder: | gleichläufiger Doppelschneckenextruder, APV MP19 |
| Temperaturprofil: | HZ1 170 °C bis 220 °C |
| | HZ2 180 °C bis 230 °C |
| | HZ3 190 °C bis 230 °C |
| | HZ4 210 °C bis 240 °C |
| | HZ5 (Düse) 200 °C bis 240 °C |
| Schneckendrehzahl: | 100 U/min |
| Druck: | ca. 10 bis 30 bar |
| Strangkühlung: | Wasserbad (10 °C) |

Das Temperaturprofil wurde abhängig von der Erweichungstemperatur des Polymeren gewählt.

### 4. Herstellung thermoplastischer Polyurethane

Aus den Ausgangsmaterialien wurden die in Tab. 1 ersichtlichen thermoplastischen Polyurethane TPU 1 bis 6 gemäß der allgemeinen Vorschrift aus 3. hergestellt.

**Tabelle 3**

| Zusammensetzung der TPUs 1 bis 6 | | | | | | |
|---|---|---|---|---|---|---|
| | TPU 1 (Gew.-Teile) | TPU 2 (Gew.-Teile) | TPU3 (Gew.-Teile) | TPU 4 (Gew.-Teile) | TPU 5 (Gew.-Teile) | TPU6 (Gew.-Teile) |
| Poly1 | 34,24 | | | | | |
| Poly2 | 34,24 | | 55,61 | | 61,22 | 48,56 |
| Poly3 | | 51,96 | | 45,57 | | |
| Iso1 | 25,47 | 37,41 | 35,04 | 41,92 | 31,84 | 40,30 |
| KV1 | 4,52 | 9,09 | 7,60 | 12,06 | 5,94 | 10,14 |
| KV2 | | 1,10 | | | | |
| Stab1 | 1,00 | 0,30 | 1,00 | 0,30 | 1,00 | 1,00 |
| UV1 | 0,50 | | 0,35 | | | |
| Wachs1 | | | 0,05 | | 0,05 | |
| Wachs2 | | 0,15 | | 0,15 | | |

### 5. Bestimmung der mechanischen Eigenschaften der TPUs

Die mechanischen Eigenschaften der erzeugten TPUs, gemessen an Spritzgussplatten aus den gemäß Sektion 4 hergestellten TPUs, ergeben sich aus Tabelle 4.

**Tabelle 4**

| mechanische Eigenschaften der erzeugten TPUs | | | | | | | |
|---|---|---|---|---|---|---|---|
| TPU | | TPU1 | TPU2 | TPU3 | TPU4 | TPU5 | TPU6 |
| Dichte | [g/cm³] | 1,08 | 1,21 | 1,12 | 1,22 | 1,11 | 1,15 |

| TPU | | TPU1 | TPU2 | TPU3 | TPU4 | TPU5 | TPU6 |
|---|---|---|---|---|---|---|---|
| Härte | [Shore A] | 72 | 85 | 87 | 90 | 80 | 96 |
| Abrieb | [mm³] | 33 | 67 | 34 | 69 | 68 | 28 |
| Zugfestigkeit | [MPa] | 36 | 35 | 46 | 44 | 46 | 54 |
| Reißdehnung | [%] | 700 | 890 | 600 | 690 | 800 | 530 |
| Weiterreißwiderstand | [N/mm] | 45 | 46 | 75 | 65 | 63 | 102 |

### 6. Herstellung der Träger-Vliese (erste Vliesschicht (i))

Aus TPU3 und TPU6 wurden auf einer Meltblown Technikumsanlage Spinvliese mit einem Flächengewicht von 50 und 90 g/m³ hergestellt. Hierzu wurde das jeweilige TPU in einem Zweiwellenextruder ausgeschmolzen, mittels einer Schmelzepumpe kontinuierlich in den Spinnkopf gefördert und auf einem drunter laufenden Förderband, dass mit einem Trennvlies aus Polypropylen belegt war, abgelegt. Das Trennvlies hatte nur die Funktion eines Separators, um ein Verkleben des TPU-Vlieses mit der Unterlage zu verhindern und ein einfaches Auf- und Abrollen der hergestellten TPU-Vliese zu gewährleisten. Die TPU Fasern innerhalb des hergestellten Vlieses waren fest miteinander verschweißt und ließen sich nicht voneinander trennen.

**Tabelle 5**

| TPU Vliese | | | | | |
|---|---|---|---|---|---|
| Vlies [erste Vliesschicht (i)] | | Vlies 1 TPU3 | Vlies 2 TPU3 | Vlies 3 TPU6 | Vlies 4 TPU6 |
| Flächengewicht | [g/m³] | 50 | 90 | 50 | 90 |
| Durchschnittliche Faserstärke | [µm] | 20 | 20 | 20 | 25 |
| Reißdehnung | [%] | 420 | 480 | 280 | 360 |
| Maschenweite (geschätzter Mittelwert aus REM Aufnahme) | [µm] | 80 | 40 | 80 | 40 |

### 7. Herstellung der Elektrospinning Beschichtung /Herstellung der Vlies-Verbundstoffe

### 7.1 Herstellung von Polymer-Lösungen aus TPU1, TPU2, TPU4, TPU5

Aus den TPU's 1,2,4,5 wurde jeweils eine 10 Gewichts-% tige Lösung in THF (Tertrahydrofuran) hergestellt. Hierzu wurden 100 g des jeweiligen TPU, sowie 800 ml THF in ein 1500 ml Rollglas gegeben. Das Rollglas wurde 10 h kontinuierlich auf einer Rollanlage bewegt bis sich alles TPU aufgelöst hatte. Die TPU Lösung wurde anschließend durch einen 20 µm Filter gezogen und in ein Weithalsglas mit THF-dichtem Deckel verpackt.

### 7.2 Herstellung der elektrogesponnen Polymer-Schicht auf den Träger-Vliesen

Die aus 7.1 erhaltenen Polymerlösungen wurden in einer Labor-Elektrospinnanlage zu Nano TPU Fasern direkt auf die TPU-Träger-Vliese (d.h. auf die erste Vliesschicht (i)) bei Raumtemperatur (25°C) und bei Normaldruck (1013 mbar) versponnen. Für die Spinnversuche wurde eine Labor-Elektrospinnanlage mit rotierender Elektrode gemäß US

2010/0028553 A1 verwendet. Die rotierende Elektrode wies Drähte auf, welche auf einem rotierenden Zylinder angeordnet waren (Drahtelektrode). Die Lösungen wurden bei 80 kV versponnen. Hierzu wurden die Trägervliese aus 6. (d.h. die jeweilige erste Vliesschicht (i)) auf das Spinnbett der Labor-Elektrospinnanlage gelegt und kontinuierlich mittels einer Rollvorrichtung über diese bewegt, lineare Geschwindigkeit im Bereich von 0,13 - 1,5 m/Minute. Der Elektrospinnkopf bewegte sich bei diesem Aufbau kontinuierlich horizontal über das Trägervlies.

Die Elektrospinnfasern des Elektrospinnvlieses (d.h. der jeweiligen zweiten Vliesschicht (ii)) wurden, aufgrund der chemisch identischen Materialien und des verwendeten noch enthaltenen Lösungsmittels, fest mit dem TPU-Trägervlies kaltverschweißt, wie aus Elektronenmikroskop-Aufnahmen ersichtlich ist.

Der mittlere aus Rasterelektronenaufnahmen ermittelte Durchmesser der Elektrospinnfasern lag bei ca. 100 nm, die erzielbare Maschenweite lag bei ca. 1000 nm.

Die Eigenschaften der erfindungsgemäß hergestellten Vlies-Verbundstoffe in Anlehnung an die DIN Normen ergeben sich aus Tab. 6:

**Tabelle 6**

| Eigenschaften der Vlies-Verbundstoffe | | | | | | | |
|---|---|---|---|---|---|---|---|
| Nanofaser aus | | TPU3 | TPU5 | TPU1 | TPU2 | TPU3 | TPU4 |
| Trägervlies (erste Vliesschicht (i)) | | Vlies 1 | Vlies 1 | Vlies 4 | Vlies 1 | Vlies 2 | Vlies 3 |
| Flächengewicht | [g/m³] | 55 | 58 | 100 | 55 | 100 | 30 |
| Wasserdichtigkeit (LEP) | [bar] | >0,5 | >0,5 | >1 | >1 | >1 | >1 |
| Wasserdampfdurchlässigkeit (WDD) 38 °C/90 % rel. Feuchte | [g/m²*d] | 3780 | 3650 | 2400 | 2250 | 2330 | 3300 |
| Wasserdampfdurchlässigkeit (WDD) 23 °C/90% rel. Feuchte | [g/m²*d] | 1640 | 1550 | 960 | 850 | 910 | 1300 |
| Reißdehnung | [%] | >400 | >400 | 350 | >400 | >500 | >250 |
| Maschenweite Elektrospinnvlies (zweite Vliesschicht (ii)) | [nm] | 1000 | 1000 | 1000 | 1000 | 1000 | 1000 |
| Maschenweite Vlies-Verbundstoff | [nm] | 1000 | 1000 | 1000 | 1000 | 1000 | 1000 |

Wie aus den Messwerten ersichtlich, zeigten alle Vlies-Verbundstoffe eine ausreichende Reißdehnung (vorzugsweise >200 %). Die Wasserdampfdurchlässigkeit (WDD) bei 38 °C und 90% Luftfeuchtigkeit betrug bei allen Vlies-Verbundstoffen mindestens 1000g/m²*d. Die Wasserdichtigkeit (LEP) war jeweils größer als 0,5 bar.

### Angeführte Literatur

EP 2 077 733 81
US 2010/0028553 A1
WO 2012/111930 A2
KR 2017120821 A
KR 2017120807 A
KR 2017120818 A
"Kunststoffhandbuch, 7, Polyurethane", Carl Hanser Verlag, 3. Auflage 1993, Sektion 3.1.
"Kunststoffhandbuch"; 7, "Polyurethane", Carl Hanser Verlag, 1. Auflage 1966, Seiten 103-113

## Patentansprüche

1. Vlies-Verbundstoff, umfassend
i) eine erste Vliesschicht umfassend Fasern aus einem ersten thermoplastischen Elastomer aufweisend Maschen mit einer Maschenweite im Bereich von 10 bis 100 µm;
ii) eine zweite Vliesschicht umfassend Fasern aus einem zweiten thermoplastischen Elastomer aufweisend Maschen mit einer Maschenweite von ≤ 2 µm, bevorzugt von ≤ 1,5 µm, weiter bevorzugt von ≤ 1,0 µm, aufgebracht auf der ersten Vliesschicht;
wobei die Fasern der zweiten Vliesschicht zumindest teilweise in direktem Kontakt mit den Fasern der ersten Vliesschicht stehen, sowie die Maschenöffnungen der ersten Vliesschicht zumindest teilweise überdecken, und wobei die Fasern der ersten Vliesschicht und der zweiten Vliesschicht im Kontaktbereich zumindest anteilig miteinander formschlüssig verbunden sind.

2. Vlies-Verbundstoff nach Anspruch 1, wobei die zweite Vliesschicht auf der ersten Vliesschicht mittels Elektrospinnen aufgebracht oder aufbringbar ist.

3. Vlies-Verbundstoff nach Anspruch 1 oder 2, wobei das erste thermoplastische Elastomer der ersten Vliesschicht (i) und das zweite thermoplastische Elastomer der zweiten Vliesschicht (ii) unabhängig voneinander ausgewählt sind aus der Gruppe bestehend aus Polyurethan, Polyester, Polyetherester, Polyesterester, Polyamid, Polyetheramid, Polybutadienstyrol und Ethylenvinylacetat, wobei das erste thermoplastische Elastomer und das zweite thermoplastische Elastomer so ausgewählt sind, dass sie zueinander kompatibel sind, wobei bevorzugt das erste thermoplastische Elastomer und das zweite thermoplastische Elastomer beide ein, jeweils zueinander kompatibles, thermoplastisches Polyurethan (TPU) sind, wobei das TPU der ersten Vliesschicht (i) gleich oder verschieden, bevorzugt gleich, zu dem TPU der zweiten Vliesschicht (ii) ist.

4. Vlies-Verbundstoff nach einem der Ansprüche 1 bis 3, wobei die Fasern der ersten Vliesschicht (i) und der zweiten Vliesschicht (ii) jeweils unabhängig voneinander einen Durchmesser im Bereich von 0,01 bis 100 µm aufweisen, wobei bevorzugt die Fasern der ersten Vliesschicht (i) einen Durchmesser im Bereich von 1 bis 50 µm, bevorzugt im Bereich von 10 bis 30 µm; und die Fasern der zweiten Vliesschicht (ii) einen Durchmesser im Bereich von 0,01 bis ≤0,5 µm, bevorzugt im Bereich von 0,05 bis ≤0,5 µm, aufweisen.

5. Vlies-Verbundstoff nach einem der Ansprüche 1 bis 4, wobei die zweite Vliesschicht (ii) eine Maschenweite im Bereich von 50 bis 2000 nm, bevorzugt im Bereich von 200 bis 1500 nm, weiter bevorzugt im Bereich von 300 bis 1000 nm, aufweist; und/oder, bevorzugt und, wobei die erste Vliesschicht (i) eine Maschenweite im Bereich von 20 bis 95 µm, bevorzugt im Bereich von 30 bis 90 µm, weiter bevorzugt im Bereich von 40 bis 80 µm, aufweist.

6. Vlies-Verbundstoff nach einem der Ansprüche 1 bis 5, wobei der Vliesverbundstoff insgesamt eine Maschenweite von weniger als 2000 nm, bevorzugt im Bereich von 50 bis 2000 nm, weiter bevorzugt im Bereich von 200 bis 1500 nm, weiter bevorzugt im Bereich von 300 bis 1000 nm, aufweist.

7. Verfahren zur Herstellung eines Vlies-Verbundstoffes umfassend:
a) Bereitstellen einer ersten Vliesschicht (i) umfassend Fasern aus einem ersten thermoplastischen Elastomer und aufweisend Maschen mit einer Maschenweite im Bereich von 10 bis 100 µm;
b) Bereitstellen einer Polymerlösung oder einer Polymerschmelze oder eines Polymerreaktivsystems, umfassend ein zweites thermoplastisches Elastomer oder dessen Komponenten, welches zu dem ersten thermoplastischen Elastomer der ersten Vliesschicht (i) kompatibel ist;
c) Aufbringen einer zweiten Vliesschicht (ii) auf der ersten Vliesschicht (i) mittels Elektrospinnen, wobei die zweite Vliesschicht (ii) Fasern aus einem zweiten thermoplastischen Elastomer aufweisend Maschen mit einer Maschenweite von ≤ 2 µm, bevorzugt von ≤ 1 µm, umfasst; unter Erhalt eines Vlies-Verbundstoffes.

8. Verfahren zur Herstellung eines Vlies-Verbundstoffes nach Anspruch 7, wobei das erste thermoplastische Elastomer der gemäß (a) bereitgestellten erste Vliesschlicht (i) und das zweite thermoplastische Elastomer der gemäß (b) bereitgestellten Polymerlösung unabhängig voneinander ausgewählt sind aus der Gruppe bestehend aus Polyurethan, Polyester, Polyetherester, Polyesterester, Polyamid, Polyetheramid, Polybutadienstyrol und Ethylenvinylacetat, wobei das erste thermoplastische Elastomer und das zweite thermoplastische Elastomer so ausgewählt sind, dass sie zueinander kompatibel sind, wobei bevorzugt das erste thermoplastische Elastomer und das zweite thermoplastische Elastomer beide ein, jeweils zueinander kompatibles, thermoplastisches Polyurethan (TPU) sind, wobei das erste TPU gleich oder verschieden, bevorzugt gleich, zu dem zweiten TPU ist.

9. Verfahren zur Herstellung eines Vlies-Verbundstoffes nach Anspruch 7 oder 8, wobei die gemäß (b) bereitgestellte Polymerlösung ein organisches Lösungsmittel mit einem log_{KOW} im Bereich von -1,5 bis +1 umfasst, bevorzugt ausgewählt aus der Gruppe von Dimethylformamid (DMF, log_{KOW} -0,85), Tetrahydrofuran (THF, log_{Kow} 0,46), Dimethylsulfoxid (DMSO, log_{Kow} -1,35), N-Methyl-2-pyrrolidon (NMP, log_{KOW} -0,46), Essigsäureethylester (Ethylacetat, log_{KOW} 0,73), Methylethylketon (MEK, log_{KOW} 0,29), Ethylethylketon (EEK, log_{KOW} 0,99) und Mischungen von zwei oder mehr dieser organischen Lösungsmittel. weiter bevorzugt ausgewählt aus der Gruppe von DMF, THF und Mischungen von DMF und THF.

10. Verfahren zur Herstellung eines Vlies-Verbundstoffes nach einem der Ansprüche 7 bis 9, wobei die Fasern der gemäß (a) bereitgestellten ersten Vliesschicht (i) einen Durchmesser im Bereich von 0,01 bis 100 µm, bevorzugt im Bereich von 1 bis 50 µm, weiter bevorzugt im Bereich von 10 bis 30 µm, aufweisen.

11. Verfahren zur Herstellung eines Vlies-Verbundstoffes nach einem der Ansprüche 7 bis 10, wobei die Fasern der gemäß (c) aufgebrachten zweiten Vliesschicht (ii) einen Durchmesser im Bereich von 0,01 bis 2 µm, bevorzugt im Bereich von 0,01 bis ≤0,5 µm, weiter bevorzugt im Bereich von 0,05 bis ≤0,5 µm, aufweisen; und/oder, bevorzugt und, wobei die gemäß (c) aufgebrachte zweite Vliesschicht (ii) eine Maschenweite im Bereich von 50 bis 2000 nm, bevorzugt im Bereich von 200 bis 1500 nm, weiter bevorzugt im Bereich von 300 bis 1000 nm, aufweist.

12. Verfahren zur Herstellung eines Vlies-Verbundstoffes nach einem der Ansprüche 7 bis 11, wobei die gemäß (a) bereitgestellte erste Vliesschicht (i) eine Maschenweite im Bereich von 20 bis 95 µm, bevorzugt im Bereich von 30 bis 90 µm, weiter bevorzugt im Bereich von 40 bis 80 µm, aufweist.

13. Verfahren nach einem der Ansprüche 7 bis 12, wobei der gemäß (c) erhaltene Vlies-Verbundstoff insgesamt eine Maschenweite von weniger als 2000 nm, bevorzugt im Bereich von 50 bis 2000 nm, weiter bevorzugt im Bereich von 200 bis 1500 nm, weiter bevorzugt im Bereich von 300 bis 1000 nm, aufweist.

14. Vlies-Verbundstoff, erhalten oder erhältlich nach dem Verfahren gemäß einem der Ansprüchen 7 bis 13.

15. Verwendung eines Vlies-Verbundstoffes gemäß einem der Ansprüchen 1 bis 6 oder eines Vliesverbundstoffes erhalten oder erhältlich nach dem Verfahren gemäß einem der Ansprüchen 7 bis 13 für die Herstellung eines Funktionsartikels, wobei der Funktionsartikel bevorzugt ausgewählt ist aus der Gruppe bestehend aus Funktionsbekleidungsstück, insbesondere Jacke, Hose, Pulli, Weste, Kapuzenshirt, Overall, Cape, Poncho, Mantel, Mütze oder Hut, bevorzugt für Sportbekleidung wie Golf- Ski, Wander-, Lauf-, Joggingbekleidung, Funktionsschuh, Funktionsgegenstand, insbesondere Tasche, Rucksack oder Zelt; Badebekleidungsstück, insbesondere Badeanzug, Tankini, Bikini, Badehose, Badeschuh oder Badekappe; Bekleidung für Wassersport, insbesondere Segelbekleidung, Surfbekleidung oder Kitesurfbekleidung, bevorzugt Surfbekleidung oder Kitesurfbekleidung, bevorzugt Funktionsbekleidungsstück.
